# EUROPEAN PATENT SPECIFICATION

(11) **EP 3 352 496 B1**
(45) Date of publication and mention of the grant of the patent: **13.03.2024**
(21) Application number: 16848690.0
(22) Date of filing: 23.09.2016
(51) Int. Cl.: H04W 74/08, H04W 16/14, H04L 27/00, H04W 72/04, H04W 24/10

(54) **USER TERMINAL, WIRELESS BASE STATION, AND WIRELESS COMMUNICATION METHOD**
BENUTZERENDGERÄT, DRAHTLOSE BASISSTATION UND DRAHTLOSKOMMUNIKATIONSVERFAHREN
TERMINAL D'UTILISATEUR, STATION DE BASE SANS FIL, ET PROCÉDÉ DE COMMUNICATION SANS FIL

(30) Priority: 24.09.2015 JP 2015187529
(43) Date of publication of application: 25.07.2018
(73) Proprietor: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); TAKAHASHI, Hideaki, Tokyo 100-6150 (JP); HAPSARI, Wuri Andarmawanti, Tokyo 100-6150 (JP); UCHINO, Tooru, Tokyo 100-6150 (JP)
(74) Representative: Hoffmann Eitle
(86) International application number: PCT/JP2016/078114
(87) International publication number: WO 2017/051902

(56) References cited:
- WO-A1-2009/072521
- WO-A1-2010/032675
- WO-A1-2013/141194
- WO-A1-2013/161135
- WO-A1-2015/019825
- "Work Item on Licensed-Assisted Access to Unlicensed Spectrum", 3GPP DRAFT; RP-151390, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Phoenix, USA; 20150914 - 20150916 8 September 2015 (2015-09-08), XP050999864, Retrieved from the Internet: URL:http://www.3gpp.org/ftp/Meetings_3GPP_ SYNC/RAN/Docs/ [retrieved on 2015-09-08]
- ERICSSON: "UE RRM requirements for LAA", 3GPP DRAFT; R4-154571 LAA RRM OVERVIEW, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Beijing, China; 20150824 - 20150828 23 August 2015 (2015-08-23), XP051008139, Retrieved from the Internet: URL:http://www.3gpp.org/ftp/Meetings_3GPP_ SYNC/RAN4/Docs/ [retrieved on 2015-08-23]
- ERICSSON: "RSSI measurement reporting for LAA", 3GPP DRAFT; R2-153659 - RSSI MEASUREMENT REPORTING FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, P.R. China; 20150824 - 20150828 23 August 2015 (2015-08-23), XP051004326, Retrieved from the Internet: URL:http://www.3gpp.org/ftp/Meetings_3GPP_ SYNC/RAN2/Docs/ [retrieved on 2015-08-23]
- COOLPAD: 'Discussion on high layer impacts of LAA' 3GPP TSG-RAN WG2#89, R2-150174 13 February 2015, XP050935520
- CATT ET AL: "Scheduling scheme for inter-frequency/RAT measurements", 3GPP DRAFT; R2-060986, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20060324, 24 March 2006 (2006-03-24), XP050130915,

## Description

### Technical Field

The present invention relates to a user terminal, a radio base station and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower delays and so on (see non-patent literature 1). Also, the specifications of LTE-A (also referred to as LTE-advanced, LTE Rel. 10, 11 or 12) have been drafted for further broadbandization and increased speed beyond LTE (also referred to as LTE Rel. 8 or 9), and successor systems of LTE (also referred to as, for example, FRA (Future Radio Access), 5G (5th generation mobile communication system), LTE Rel. 13 and so on) are under study.

Also, the specifications of LTE-A (also referred to as "LTE-advanced," "LTE Rel. 10," "LTE Rel. 11" or "LTE Rel. 12") have been drafted for further broadbandization and increased speed beyond LTE (also referred to as LTE Rel. 8 or 9), and successor systems of LTE (also referred to as, for example, "FRA" (Future Radio Access), "5G" (5th generation mobile communication system), "LTE Rel. 13" and so on) are under study. Carriers that constitute the fundamental units in carrier aggregation are referred to as "component carriers" (CCs), and are equivalent to the system band of LTE Rel. 8.

Also, the specifications of LTE Rel. 8 to 12 have been drafted assuming exclusive operations in frequency bands that are licensed to operators (licensed bands). As licensed bands, for example, the 800 MHz, 2 GHz and/or 1.7 GHz bands are used. Meanwhile, in LTE of Rel. 13 and later versions, operation in frequency bands where license is not required (unlicensed bands) is also a target of study. For unlicensed bands, for example, the 2.4 GHz and/or the 5 GHz band are used as in Wi-Fi (registered trademark).

Although carrier aggregation (LAA: license-assisted access) between licensed bands and unlicensed bands is placed under study in Rel. 13 LTE, there is a possibility that, in the future, dual connectivity and unlicensed-band stand-alone will become the target of study as well.

### Citation List

### Non-Patent Literature

Non-Patent Literature 1: 3GPP TS 36. 300 "Evolved Universal Terrestrial Radio Access (E-UTRA) and Evolved Universal Terrestrial Radio Access Network (E-UTRAN); Overall Description; Stage 2".

3GPP Draft RP-151390, discloses a user terminal (and a corresponding base station) for a radio communication system employing Listen Before Talk, LBT, in carrier aggregation performed using a licensed band and an unlicensed band, the user terminal comprising a receiving section, a measurement section configured to make an RSSI measurement for a specific frequency carrier, and a transmission section configured to transmit a measurement result. This document also discloses a corresponding method.

Other relevant prior art is 3GPP Draft R4-154571, 3GPP Draft R2-153659, WO 2103/161135 A1, WO 2013/141194 A1, WO2009/072521 A1 and WO 2015/019825 A1.

### Summary of Invention

### Technical Problem

Now, when a plurality of carriers are used in CA, it is necessary to select cells by taking into consideration the interference between the cells. In LTE Rel. 12 and earlier versions, a user terminal measures the RSSI (Received Signal Strength Indicator) of a signal designated by a radio base station, and, based on this RSSI measurement result, reports RSRQ (Reference Signal Received Quality) to the radio base station, so that the radio base station can know the condition of interference as measured by the user terminal. The radio base station selects a cell based on such interference measurement results.

CA in LTE Rel. 13 and later versions presumes LAA, which is CA using licensed bands and unlicensed bands, as mentioned earlier. Consequently, in order to enable adequate radio communication, it is necessary to take into consideration the interference in unlicensed bands, in addition to the interference in licensed bands.

As for the method of measuring interference in unlicensed bands, for example, it may be possible to measure interference by using the same method as the RSSI measurement method used in licensed bands. However, unlicensed band cells are different from licensed band cells in that signals such as DRSs (Discovery Reference Signals) are not transmitted periodically. Consequently, it is difficult to apply an RSSI-based measurement method for use in licensed bands to unlicensed bands an on as-is basis. Due to this, interference in unlicensed bands cannot be measured accurately, which then makes it difficult to improve the spectral efficiency in communication using unlicensed bands.

The present invention has been made in view of the above, and it is therefore an object of the present invention to provide a user terminal, a radio base station and a radio communication method that can improve spectral efficiency in communication using unlicensed carriers.

### Solution to Problem

According to one aspect of the present invention there is provided a terminal as set out in Claim 1.

According to a second aspect of the present invention, there is provided a radio base station as set out in Claim 3.

According to a third aspect of the present invention, there is provided a method as set out in Claim 4.

### Advantageous Effects of Invention

According to the present invention, it is possible to achieve improved spectral efficiency in communication using unlicensed carriers.

### Brief Description of Drawings

FIG. 1A and FIG. 1B each show a diagram to explain an overview of a radio communication system;
FIG. 2 is a sequence diagram to show an unlicensed band selection operation in a radio communication system;
FIG. 3A and FIG. 3B each show a diagram to explain examples of measurement gap periods configured in MGC and RSSI MTC;
FIG. 4 is a schematic diagram to show an arrangement of radio resources for use when RSSI MTC gaps are not provided apart from MGC gaps;
FIG. 5 is a sequence diagram to show an unlicensed band selection operation in a radio communication system;
FIG. 6A and FIG. 6B each show a diagram to explain examples of measurement gap periods configured in MGC and RSSI MTC;
FIG. 7 is a diagram to show an example of a schematic structure of a radio communication system;
FIG. 8 is a diagram to show an example of an overall structure of a radio base station;
FIG. 9 is a diagram to show an example of a functional structure of a radio base station;
FIG. 10 is a diagram to show an example of an overall structure of a user terminal; and
FIG. 11 is a diagram to show an example of a functional structure of a user terminal.

### Description of Embodiments

In CA in LTE successor systems (LTE Rel. 10 to 12), the maximum number of CCs that can be configured per user terminal is limited to five. Meanwhile, in more advanced successor systems of LTE such as LTE Rel. 13 and later versions, a study is in progress to soften the limit of the number of CCs that can be configured per user terminal, and to use enhanced carrier aggregation (referred to as "CA enhancement," "enhanced CA," etc.), in which six or more CCs (cells) are configured.

When a plurality of cells are placed in CA, a user terminal has to receive signals transmitted from each individual cell. In CA of LTE Rel. 12 or earlier versions, a user terminal measures interference by using received signals. To be more specific, a user terminal measures RSSI by measuring the strength of a signal that is received, and, based on the result of this RSSI measurement, reports RSRQ, which represents the quality of the received signal, to a radio base station. By so doing, the radio base station can learn the strength of signals received in the user terminal, and estimate the magnitude of interference which the user terminal receives. Based on the interference-related information acquired thus, the radio base station can select am optimal connecting cell for the user terminal.

In this case, the user terminal can use the following signal strengths on radio resources as RSRI measurement targets for reporting RSRQ:
(1) the signal strength on CRS symbols in an arbitrary DL subframe;
(2) the signal strength on all symbols in a subframe designated by higher layer in a PCell (Primary Cell) frequency; and
(3) the signal strength on all symbols in a DRS (Discovery Reference Signal) subframe period.

Also, LTE Rel. 13 CA is under study to use licensed bands and unlicensed bands.

When cells are selected from unlicensed bands, for example, a user terminal's connecting cell needs to be selected by taking the interference from the surrounding cells into consideration, as in the case with licensed bands. Consequently, when an optimal connecting cell for a user terminal is to be selected in unlicensed bands, it is necessary to measure the magnitude of interference which the user terminal receives, as in conventional licensed bands. Consequently, a study is in progress to measure interference by using received signals even in user terminals in unlicensed bands.

Here, when making RSSI measurements with respect to a licensed band, a user terminal identifies the presence of the licensed band based on DRSs and others transmitted from the licensed band, and makes RSSI measurements by using signals specified by the radio base station. In this case, the radio base station indicates measurement timings to the user terminal, knowing the measurement target cell.

On the other hand, in unlicensed bands, DRSs and other signals are not necessarily transmitted on all frequency carriers. For example, in situations where the traffic is not so heavy, it might occur that only part of the frequency carriers are used in transmission, while the other frequency carriers are made non-transmission frequency carriers. To allow a user terminal to newly connect with an unlicensed band in this case, it is preferable to make the user terminal measure candidate carriers, including carriers that are being non-transmission carriers then, and connect with an optimal cell. In this case, unlike the case with a licensed band, the user terminal may not be necessarily aware of whether unlicensed bands (cells) are present, and still has to measure interference in this state. Consequently, when the user terminal measures interference in unlicensed band cells, the radio base station has to indicate measurement timings in the situation where there are no measurement target cells.

Consequently, applying an RSSI measurement method to presume that measurement target cells are identified to interference measurements in unlicensed band cells on an as-is basis might lead to the situation where a user terminal is unable to measure interference adequately. As a result of this, the condition of interference in unlicensed bands cannot be measured accurately, which then makes it difficult to improve the spectral efficiency in communication using unlicensed bands.

So, the present inventors have found out that, as in interference measurements in licensed bands, by allowing a user terminal to make adequate interference measurements based on signals received from unlicensed bands, and by selecting an unlicensed band with which the user terminal can connect based on the interference measurement results, it may be possible to improve the overall spectral efficiency of unlicensed bands, and thereupon arrived at the present invention.

That is in the present invention a user terminal measures interference in unlicensed bands (carriers) based on measurement timing configuration information for the unlicensed bands, transmitted from a licensed band (carrier) radio base station, and the licensed band radio base station selects an unlicensed band for connecting allowing the user terminal to connect with, based on the interference measurement results.

According to the present invention, a user terminal according to claim 1 measures interference in unlicensed bands based on measurement timing configuration information related to the unlicensed bands, transmitted from a licensed band radio base station, and optimal unlicensed band which the user terminal should connect with can be selected based on the measurement results. As a result of this, it is possible to improve spectral efficiency in communication using unlicensed band.

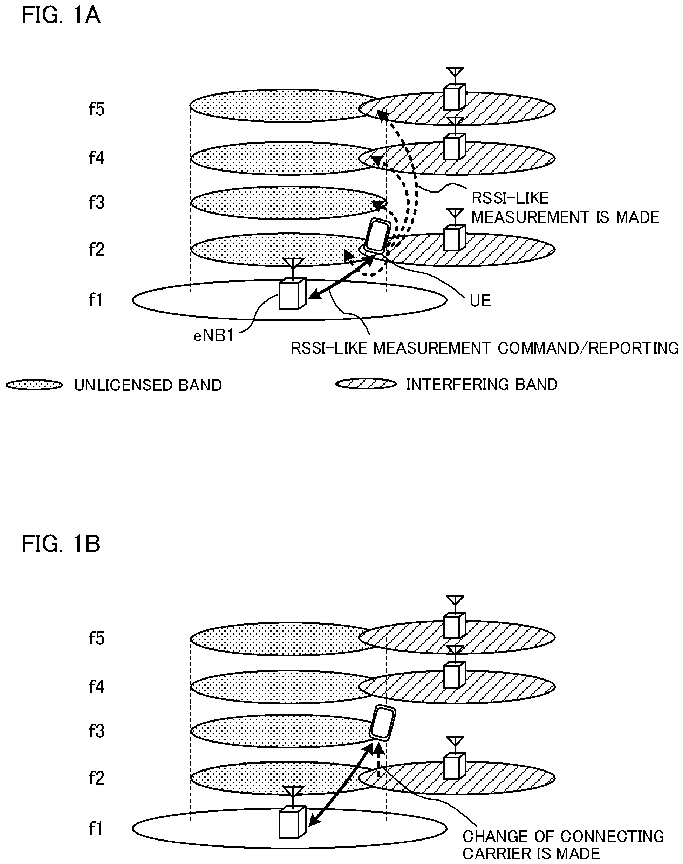

Now, embodiments of the present invention will be described below in detail. FIGs. 1 provide diagrams, each showing an overview of a radio communication system according to the present embodiment. The radio communication system shown in FIGs. 1 presumes cases where carrier aggregation (CA) is applied among a licensed band f1 and unlicensed bands f2 to f5, to communicate with a user terminal UE. Note that, hereinafter, the frequency carrier to constitute licensed band f1 (first frequency carrier) will be referred to as the "licensed carrier" whenever appropriate, and the frequency carriers to constitute unlicensed bands f2 to f5 (second frequency carriers) will be referred to as "unlicensed carriers."

FIG. 1A shows a case in which a user terminal UE is connected with licensed band f1 and unlicensed band f2. Note that, when unlicensed band f2 (or f3 to f5) and user terminal UE are connected, LBT (Listen Before Talk) is executed before signals are transmitted. Here, LBT ("listening," "CCA" (Clear Channel Assessment), etc.) refers to the operation of checking, before transmitting signals, whether or not signals to exceed a predetermined level are being transmitted from other transmission points such as radio base stations and user terminals. By using this LBT, if no signals from other systems (for example, Wi-Fi) and/or other LAA transmission points are detected, communication is carried out in the unlicensed band. By this means, the unlicensed band's radio base station and the user terminal UE can communicate with each other.

In the radio communication system according to the present invention, radio base station eNB1 of licensed band f1 transmits measurement timing configuration information pertaining to unlicensed bands (unlicensed carriers) and allows the user terminal UE to make measurements in unlicensed bands. Then, the measurement results are transmitted from the user terminal UE to radio base station eNB 1, and radio base station eNB 1 selects an optimal unlicensed band where the user terminal UE should connect.

In the radio communication system according to the present embodiment, RSSI measurement that has heretofore been used in licensed bands (licensed carriers) is applied to unlicensed band measurements. Hereinafter, the RSSI measurement to apply to unlicensed bands will be referred to as "RSSI-like measurement" for ease of explanation. In this RSSI-like measurement, the interference which a user terminal UE in an unlicensed band receives from the surrounding base stations is measured. To be more specific, the interference received from the surrounding base stations is measured by measuring the signal strength of signals received in the user terminal UE. Alternatively, the proportion of time the signal strength exceeds a certain threshold may be measured. By employing RSSI-like measurement like this, it becomes possible, even in unlicensed bands, to estimate the degree of interference which a user terminal UE receives.

Here, specific examples of changing the unlicensed band where a user terminal UE should connect, by employing RSSI-like measurement, will be described with reference to FIGs. 1. When making a user terminal UE execute RSSI-like measurements, radio base station eNB1 transmits RSSI-like measurement commands, which include transmission timing configuration information pertaining to unlicensed bands f2 to f5. The transmission timing configuration information includes, for example, measurement target frequency information and measurement gap information pertaining to unlicensed bands f2 to f5. Note that this measurement timing configuration information will be described in detail later.

Upon receiving an RSSI-like measurement command, the user terminal UE makes RSSI-like measurements of unlicensed bands f2 to f5 according to the measurement timing configuration information included in this RSSI-like measurement command. For example, the user terminal makes RSSI-like measurements based on the measurement target frequency information and measurement gap information pertaining to unlicensed bands f2 to f5. Also, since measurement timings are configured in the user terminal UE, radio base station eNB1 can make RSSI-like measurements in the target unlicensed bands, at the same timings.

Here, as shown in FIG. 1A, in unlicensed bands f2, f4 and f5, the user terminal UE receives interference that arises from neighboring radio base stations. For example, in unlicensed bands f2, f4 and f5, the user terminal UE receives interference that cannot be measured in radio base station eNB1 (interference which the user terminal UE receives as a hidden terminal). This makes the user terminal UE measure high RSSI values in unlicensed bands f2, f4 and f5. By comparing these with the RSSI values measured in radio base station eNB1 at the same time, the degree of interference in each user terminal can be estimated more accurately.

Meanwhile, in unlicensed band f3, the user terminal UE does not receive interference that arises from neighboring radio base stations. Consequently, the user terminal UE measures a lower RSSI value in unlicensed band f3 than in unlicensed bands f2, f4 and f5. Then, the user terminal UE reports the thus-measured RSSI values in unlicensed bands f2 to f5 to the radio base station eNB .

Radio base station eNB1 selects the connecting unlicensed band for the user terminal UE based on the measurement results reported. In FIG. 1A, since there is severe interference in unlicensed band f2, radio base station eNB1 commands the user terminal UE to disconnect with unlicensed band f2. Then, as shown in FIG. 1B, radio base station eNB1 commands the user terminal UE to connect with (configure/activate) unlicensed band f3, where a lower RSSI value has been measured than in unlicensed band f2. As a result of this, the user terminal UE connects with licensed band f1 and unlicensed band f3.

In this way, the user terminal UE makes measurements in unlicensed bands f2 to f5 based on measurement timing configuration information pertaining to unlicensed bands f2 to f5, transmitted from radio base station eNB1, and transmits these measurement results to radio base station eNB1. By this means, radio base station eNB1 can select an optimal unlicensed band the user terminal UE should connect with, based on the measurement results in unlicensed bands f2 to f5. As a result of this, it is possible to improve spectral efficiency in communication using unlicensed bands.

Note that, with the above description of RSSI-like measurements, a case has been described where the same measurement method is used as in conventional RSSI measurement. However, as for the measurement method to apply to RSSI-like measurement, it is possible to measure interference in the user terminal UE by using a measurement method that is different from that used in conventional RSSI measurement. Also, although the user terminal UE has been described to measure RSSI values in the above-described RSSI-like measurements, the values which the user terminal UE can measure are by no means limited to these, and various changes are possible.

### (First Embodiment)

According to the first embodiment, a user terminal (UE) receives an RSSI-like measurement command from a radio base station that uses a licensed band (LAA carrier) executes RSSI-like measurements for unlicensed bands, and the user terminal's connecting unlicensed band is selected based on the measurement results.

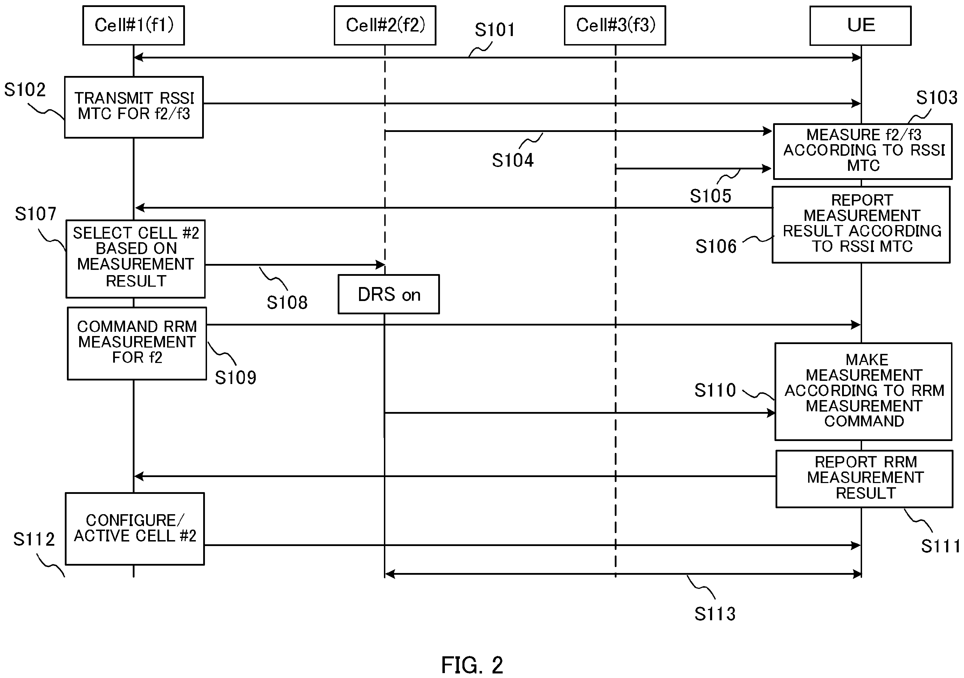

FIG. 2 is a sequence diagram an unlicensed band selection operation in radio communication system according to the first embodiment. Note that, FIG. 2 shows a sequence diagram in a radio communication system comprised of a cell #1 formed by a radio base station that uses licensed band f1, cell #2 formed by a radio base station that uses unlicensed band f2, cell #3 formed by a radio base station that uses unlicensed band f3, and a user terminal.

In FIG. 2, the user terminal is connected with cell #1 by using a licensed band. Consequently, the user terminal can communicate with cell #1 via a licensed carrier (to be more specific, via the radio base station forming cell #1) (step S101). Hereinafter, the radio base station to form cell #1 will be referred to as "radio base station eNB1" for ease of explanation.

For example, when CA using licensed band f1, unlicensed band f2 and/or f3 is applied to the user terminal UE, an RSSI-like measurement command, which includes measurement timing configuration information, is output from radio base station eNB1 to the user terminal UE. In this case, as the measurement timing information, an RSSI measurement timing configuration (hereinafter referred to as "RSSI MTC") is transmitted from cell #1 to the user terminal (step S102). Note that the information included in RSSI MTC, the mode of configuration and so on will be described later.

Upon receiving RSSI MTC, a user terminal measures RSSI in unlicensed bands based on the information configured in this RSSI MTC (step S103). Referring to FIG. 2, the user terminal UE measures the RSSIs of unlicensed bands f2 and f3 (steps S104 and S105). To be more specific, the user terminal UE measures the RSSI values of signals received on the frequencies of cell #2 and cell #3. Here, assume that the RSSI value in unlicensed band f3 is bigger than the RSSI value in unlicensed band f2. That is, the user terminal UE receives greater interference in f3 than in f2.

After having measured the RSSIs of unlicensed bands f2 and f3, the user terminal UE reports the measurement results to cell #1 (to be more specific, to radio base station eNB 1) (step S 106). Upon receiving the report of measurement results, radio base station eNB1 selects an unlicensed band the user terminal UE should connect with (step S107).

Here, unlicensed band f2, in which the RSSI value is small (and in which the interference is low), selected as an unlicensed band the user terminal UE should connect with. In this case, if cell #2 on f2 is in the off state, a command to place the DRS in the on state (a command to transmit the DRS to the user terminal UE) is output from radio base station eNB1 to cell #2 (step S108). Furthermore, an RRM measurement command for unlicensed band f2 is output from radio base station eNB 1 to the user terminal UE (step S 109).

Upon receiving the RRM measurement command, the user terminal UE, according to MeasObject and so on included in this RRM measurement command, performs an RRM (for example, RSRQ, RSRP, etc.) measurement for unlicensed band f2 (step S110). Then, the RRM measurement results are reported from the user terminal UE to radio base station eNB 1 (step S111).

Upon receiving the RRM measurement results from the user terminal, radio base station eNB1 commands the user terminal to connect with (configure/activate) cell #2 (step S112). Upon receiving this connection command, the user terminal UE connects with cell #2 (step S113). After this, the user terminal UE is able to communicate with cell #1 that constitutes licensed band f1 and cell #2 that constitutes unlicensed band f2.

In this way, according to the first embodiment, measurement timing configuration information pertaining to second frequency carriers is transmitted from cell #1 (first radio base station), and, based on this information, a user terminal makes measurements for the second frequency carriers, and transmits the measurement results to the first radio base station. Consequently, even when, for example, unlicensed carriers are used as second frequency carriers, the user terminal still can make measurements for the unlicensed carriers based on the measurement timing configuration information from the first radio base station that uses a licensed carrier, and provide the measurement results to the first radio base station. By this means, the first radio base station can select an unlicensed carrier which the user terminal should connect with, based on the unlicensed carriers' measurement results. As a result of this, even when CA is executed by using licensed bands (licensed carriers) and unlicensed bands (unlicensed carriers), it is possible to select an optimal unlicensed carrier, and improve spectral efficiency in communication using unlicensed carriers.

Note that a case is described here in which an RRM measurement command is transmitted from radio base station eNB1, and a user terminal UE makes an RRM measurement for unlicensed band f2 and reports the result (steps S109 to S111). However, the RRM measurement command, RRM measurement and reporting can be skipped. After radio base station eNB1 selects an unlicensed band where the user terminal UE should connect in step S107, radio base station eNB1 may command the user terminal UE to connect with cell #2 (step S112).

Now, examples of information included in RSSI MTC, which constitutes the measurement timing configuration information, will be described. According to the present invention, the RSSI MTC includes the following information:

### (1) measurement target frequency information

In measurement target frequency information, for example, a plurality of frequency carriers (unlicensed carriers) are configured in one RSSI MTC. Note that it is equally possible to configure every frequency carrier (unlicensed carrier) in a different RSSI MTC.

### (2) measurement period timing/cycle/duration information (measurement gap information)

In measurement period timing/cycle/duration information, additionally, information based on the subframe timings of the currently connecting cell (cell #1 in the example shown in FIG. 2) is configured. When there are a plurality of currently connecting cells, this information can be configured based on the subframes of one cell (for example, PCell).

### (3) the user terminal UE's measurement format information

In measurement format information, for example, either the proportion of time in which the RSSI value per predetermined time (1 ms) in the measurement period and the average RSSI value and the RSSI value in the measurement period exceed a certain threshold, or a histogram thereof, may be configured. Also, these pieces of information may be combined and configured.

### (4) reporting method information

In reporting method information, for example, one of the reporting cycle, the term of the validity of RSSI MTC and the event configuration for triggering reporting is configured. Also, it is equally possible to combine and configure these pieces of information.

In this way, in RSSI MTC, at least one of the measurement target frequency information, the measurement gap information, the measurement format information and the reporting method information is included. By this means, the user terminal UE can specify the information that is needed to make measurements (RSSI-like measurements) for unlicensed carriers f2 and f3. As a result of this, it is possible to make unlicensed carrier measurements (RSSI-like measurement) in a reliable manner.

Also, RSSI MTC can be configured apart from existing DMTC (Discovery Measurement Timing Configuration), the measurement gap configuration (hereinafter referred to as "MGC") or the restricted measurement subframe configuration (hereinafter referred to as "RMSC").

Hereinafter, the measurement gap period (signal blank period) that is configured in RSSI MTC will be described in comparison with a conventional measurement gap period. Note that an example to compare with the measurement gap period configured in MGC will be described below for ease of explanation.

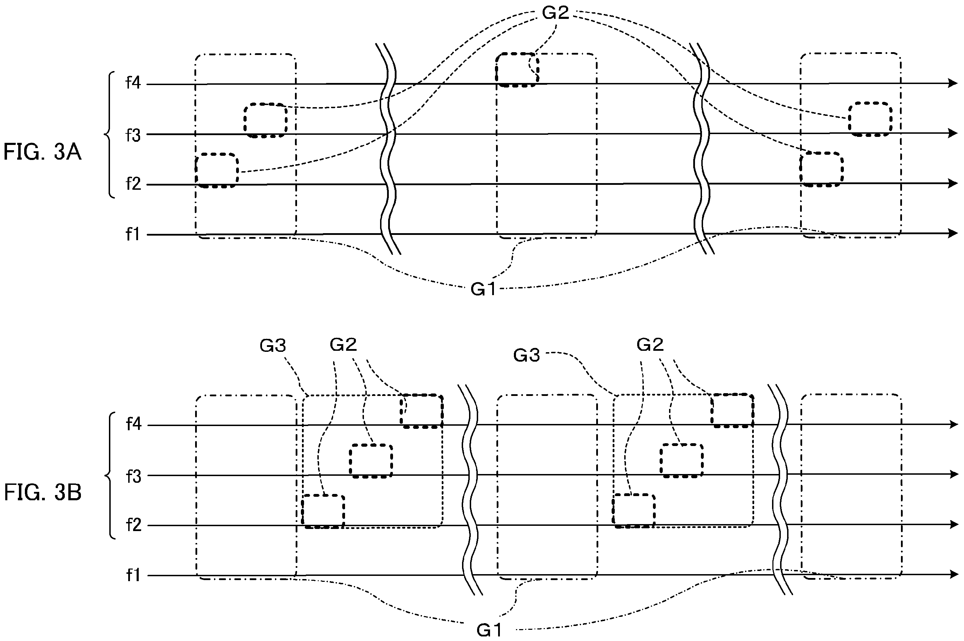

FIG. 3 is a diagram to explain examples of measurement gap periods configured in MGC and RSSI MTC. Note that FIG. 3 shows measurement gap periods in licensed band f1 and unlicensed bands f2 to f4 for ease of explanation. Note that FIG. 3A illustrates a case where RSSI MTC measurement gap periods are combined with MGC measurement gap periods. FIG. 3B illustrates a case where RSSI MTC measurement gap periods are configured apart from MGC measurement gap periods.

In MGC measurement gap periods G1 and RSSI MTC measurement gap periods G2 shown in FIG. 3, signal transmission is limited in order to measure the interference which the user terminal UE receives, based on RSSI and/or the like. Examples of measurement gap periods configured according to MGC are shown as measurement gap periods for RRM (Radio Resource Management) measurements, including existing cell detection, RSRQ, RSRP (Reference Signal Received Power) and so on.

For example, RSSI MTC measurement gap periods G2 may be arranged to be included in MGC measurement gap periods G1, as shown in FIG. 3A. Also, as shown in, FIG. 3B, RSSI MTC measurement gap periods G2 may be arranged to be included in measurement gap periods G3, which are provided apart from MGC measurement gap period G1, for RSSI-like measurements. In FIG. 3B, RSSI MTC measurement gap periods G3 are provided apart from MGC measurement gap periods G1 by using additional gaps for inter-frequency RSSI measurements.

In this way, by configuring RSSI MTC apart from existing MGC and so on, it is possible to configure measurement timing configuration information for unlicensed bands, apart from that of licensed bands. This allows measurement timing configuration information for unlicensed bands to be configured in a flexible manner, so that unlicensed band measurement timing configuration information that is suitable for the user terminal UE's capability information can be configured.

Also, according to this configuration, as shown in FIG. 3B, measurement gap information for dedicated use by second frequency carriers (f2, f3 and f4 used in cell #2, #3 and #4) is configured. Consequently, for example, when a licensed carrier and an unlicensed carrier are used as a first carrier and a second frequency carrier, respectively, it is possible to configure the unlicensed carrier' s measurement gap information in a different radio resource from the radio resource where the licensed carrier's measurement gap information is configured. By this means, it is possible to make inter-frequency measurements for the unlicensed carrier without influencing the user terminal's receiving operation in the licensed carrier.

Note that, as shown in FIG. 3B, when measurement gap periods G3 for dedicated use for unlicensed bands (for dedicated use for RSSI-like measurements) are configured, for example, the user terminal UE can make measurements (RSSI-like measurements) by using these measurement gap periods G3. In this case, measurement gap periods G3 and measurement gap periods G1 according to MGC do not have to match. Also, in measurement gap periods G3, the user terminal UE may make measurements (RSSI-like measurements) for a plurality of frequency carriers (unlicensed carriers) (see FIG. 3B). Furthermore, as will be described later in detail, a user terminal UE that is not capable of making inter-frequency unlicensed carrier measurements without holding the receiving operation in the connecting frequency carrier may be controlled not to receive signals from specified cells in measurement gap periods G3.

Meanwhile, when measurement gap periods G3 for dedicated use for unlicensed bands (for dedicated use in RSSI-like measurement) are not configured -- that is, when MGC measurement gap periods G1 are used -- radio base station eNB1 can configure RSSI MTC measurement gap periods G2 to be included in measurement gap period G1, as shown in FIG. 3A. In this case, in MGC measurement gap period G1, the user terminal UE may be controlled not to receive signals from the connecting cell.

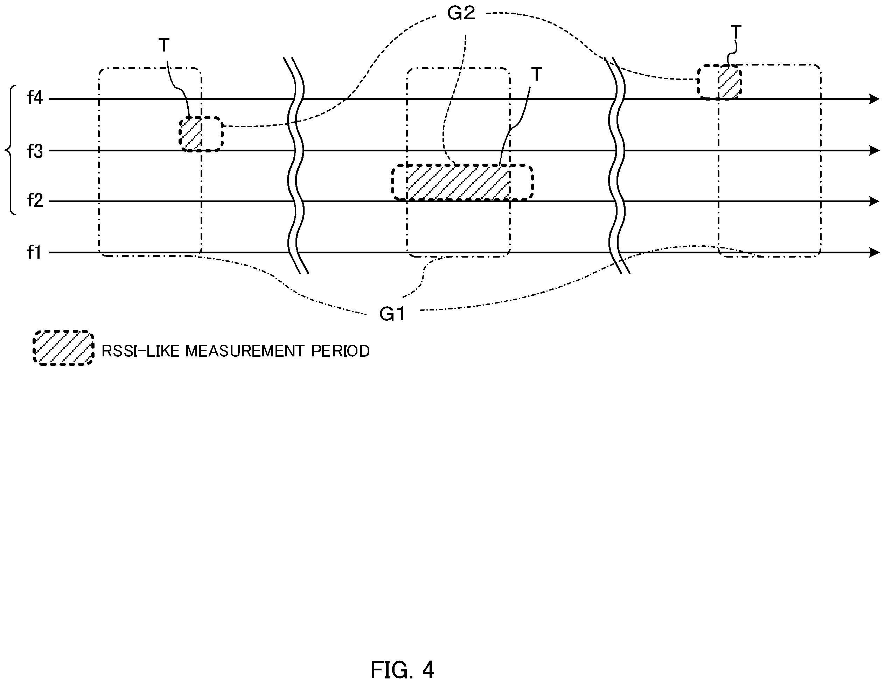

If RSSI MTC measurement gap periods G2 cannot be configured to be included in measurement gap period G1, the user terminal UE can, for example, can make measurements (RSSI-like measurements) only in parts where MGC measurement gap period G1 and RSSI MTC measurement gap periods G2 overlap. For example, as shown in FIG. 4A, user terminal UE can make measurements (RSSI-like measurements) in a period T, which is a part where measurement gap period G1 and measurement gap period G2 overlap. By allowing the user terminal UE to make measurements in this way, it is possible to measure unlicensed bands (RSSI-like measurements) even when measurement gap periods G3 for dedicated use for unlicensed bands (for dedicated use for RSSI-like measurements) are not configured.

Furthermore, with RSSI MTC, the measurement time (measurement gap period) of each measurement-target frequency carrier can be configured not to overlap one another. For example, as shown in FIG. 3A and FIG. 3B, varying measurement times (measurement gap periods) are configured in unlicensed carrier f2, f3 and f4. That is, in FIG. 3, RSSI MTC measurement time (measurement gap period) is configured on a per frequency basis, and, furthermore, configured not to overlap between varying frequencies.

In this way, measurement times, which do not overlap, are configured per measurement-target frequency carrier, as measurement timing configuration information that pertains to second frequency carriers, so that a user terminal can make adequate measurements per for each measurement-target frequency carrier. Also, the frequency carrier measurement timings in a radio base station can be coordinated with the timings in a user terminal, so that it is possible to check the measurement results by the user terminal. As a result of this, it is possible to select, reliably, an unlicensed carrier with which the user terminal should connect.

### (Second Embodiment)

A second embodiment is different from the first embodiment in that, before measurement timing configuration information (RSSI MTC) is received from radio base station eNB1 of licensed band f1, the user terminal UE's capability information (capability) is received from the user terminal UE. Here, assume that capability information as to whether or not the user terminal UE is capable of making RSSI-like measurements in carriers of different frequencies (unconnected frequency carriers) without holding the receiving operation in the connecting frequency carrier is transmitted from the user terminal UE.

Note that, hereinafter, the above capability information will be referred to as "gapless RSSI-like measurement capability information" for ease of explanation. Also, inter-frequency-carrier RSSI-like measurements that are made without holding receiving operations in connecting frequency carriers will be referred to as "gapless RSSI-like measurement."

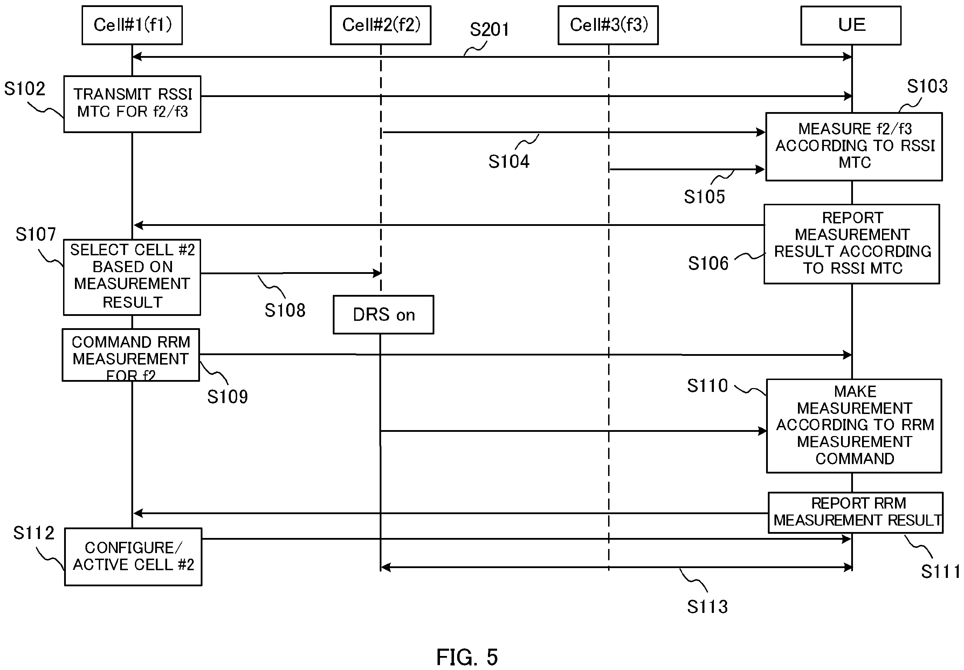

FIG. 5 is a sequence diagram to explain an unlicensed band selection operation in a radio communication system according to the second embodiment. The sequence shown in FIG. 5 is different from the sequence shown in FIG. 2 only in that user terminal UE reports capability information (capability) to the radio base station eNB. Now, the difference between FIG. 5 and FIG. 2 will be primarily described below. Processes in FIG. 5 that are the same as in FIG. 2 will be assigned the same codes and will not be described again.

Referring to FIG. 5, the user terminal UE is connected with cell #1 by using licensed band f1. Consequently, the user terminal can communicate with cell #1 via a licensed carrier (to be more specific, via radio base station eNB1 that forms cell #1) (step S201). In this case, according to the second embodiment, gapless RSSI-like measurement capability information is reported from the user terminal to radio base station eNB1. The user terminal UE, having gapless RSSI-like measurement capability information, is able to make RSSI-like measurements in unconnected unlicensed band f2 and f3 without holding the receiving operation in connecting licensed band f1.

Upon receiving the gapless RSSI-like measurement capability information, radio base station eNB1 is able to change the configuration of RSSI MTC, which is measurement timing configuration information, depending on whether not this gapless RSSI-like measurement capability information is present. For example, if the user terminal UE has gapless RSSI-like measurement capability information, a longer measurement gap period than an existing measurement gap period (MGC measurement gap period) can be configured. According to the second embodiment, RSSI MTC is thus configured differently depending on whether or not gapless RSSI-like measurement capability information is present, and reported to the user terminal UE (step S102).

In this way, according to the second embodiment, gapless RSSI-like measurement capability information is transmitted from the user terminal UE, so that radio base station eNB1 can configure RSSI MTC to be suitable to this capability information. For example, radio base station eNB1 can configure RSSI MTC differently depending on whether or not the receiving operation is held in the connecting frequency carrier when making measurements in unlicensed bands. By this means, the operations of the user terminal UE when making measurements in unlicensed bands (the measurement operation, the receiving operation, etc.) can be configured flexibly.

The user terminal UE can control RSSI-like measurements as will be described below depending on whether or not gapless RSSI-like measurement capability information is present in the user terminal UE. Now, the RSSI-like measurement-related control in the user terminal UE will be described below, assuming both the case where the user terminal UE has gapless RSSI-like measurement capability information and the case where the user terminal UE does not have gapless RSSI-like measurement capability information.

First, the case where the user terminal does not have gapless RSSI-like measurement capability information will be described. The user terminal UE without gapless RSSI-like measurement capability information can perform the receiving operation and/or the measurement operation, as shown below, based on the timings of MGC measurement gap periods and PSSI MTC measurement gap periods.

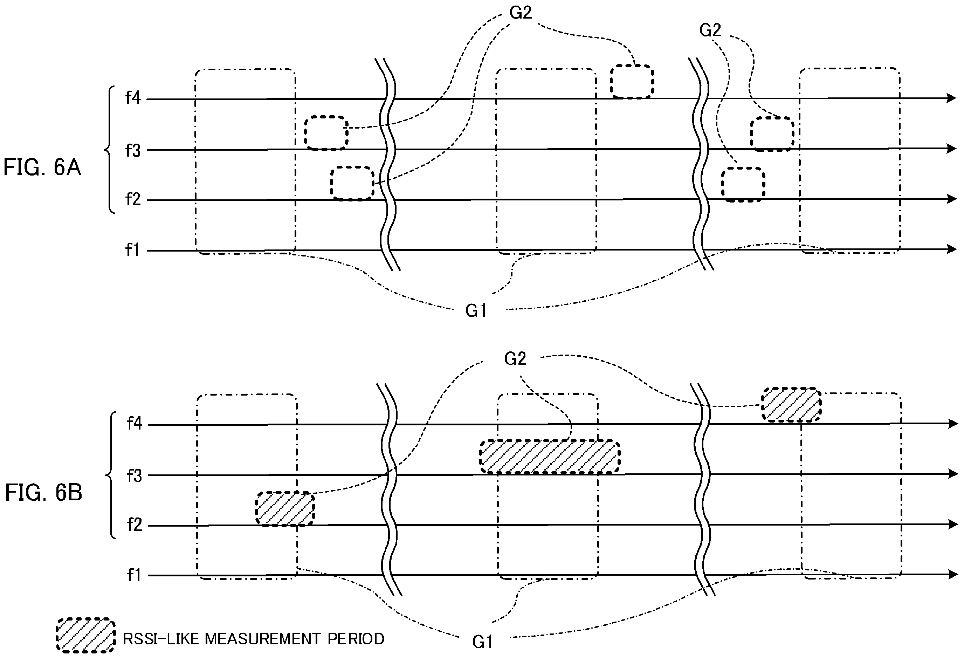

FIGs. 6 provide diagrams to explain examples of measurement gap periods configured in MGC and RSSI MTC. In FIGs. 6, configurations that are the same as in FIGs. 3 and FIG. 4 will be assigned the same codes and will not be described again. Note that FIGs. 6 show measurement gap periods in licensed band f1 and unlicensed bands f2 to f4 for ease of explanation. Note that FIG. 6A illustrates a case where MGC measurement gap periods G1 and RSSI MTC measurement gap periods G2 do not match. FIG. 6B illustrates a case where MGC measurement gap periods G1 and RSSI MTC measurement gap periods G2 partially overlap.

As shown in FIG. 6A, when the timings of MGC measurement gap periods G1 and the timings of RSSI MTC measurement gap periods G2 do not match, the user terminal UE can exert control not to receive in the connecting frequency carriers designated in the RSSI-like measurement periods (measurement gap periods G2). That is, in the case illustrated in FIG. 6A, the user terminal UE does not have to receive based on the specification by cell #1 (radio base station eNB1) provided in RSSI MTC.

On the other hand, when the timings of MGC measurement gap periods G1 and the timings of RSSI MTC measurement gap periods G2 match (see FIG. 3A), the user terminal can make RSSI-like measurements by using MGC measurement gap periods G1.

In this case, if an RSSI MTC measurement gap period G2 is shorter than an MGC measurement gap period G1 -- that is, if an RSSI MTC measurement gap period G2 is included in an MGC measurement gap periods G1 -- it is possible to make RSSI-like measurements for a plurality of frequency carriers (unlicensed carriers) within a single MGC measurement gap period G1 (see, for example, FIG. 3A).

On the other hand, when an RSSI MTC measurement gap period G2 is longer than an MGC measurement gap period G1, the user terminal UE can make RSSI-like measurements in the portion exceeding the gap period G1, in accordance with the configuration of RSSI MTC. In this case, as shown in FIG. 6B, the user terminal UE can make RSSI-like measurements in RSSI MTC measurement gap period G2 that partially overlap MGC measurement gap periods G1.

Furthermore, when an RSSI MTC measurement gap period G2 is longer than an MGC measurement gap period G1, the user terminal UE may be controlled to judge that the configuration of RSSI MTC is wrong (error configuration) with respect to the portion that exceeds the measurement gap period G1, and not make RSSI-like measurements.

Next, the case in which the user terminal UE has gapless RSSI-like measurement capability information will be described. For a user terminal UE like this, radio base station eNB1 of licensed band f1 can configure measurement gap periods G2 that are longer than MGC measurement gap periods G1, in RSSI MTC, as described above. Consequently, the user terminal UE can make RSSI-like measurements in measurement gap periods G2 that are longer than measurement gap periods G1, in accordance with the configuration of RSSI MTC.

Also, in this case, the user terminal UE can form an RSSI-like measurement result report with metrics that are acquired in measurements in measurement gap periods G2 that are longer than MGC measurement gap periods G1 (for example, the proportion of time, in which the RSSI value is equal to or greater than a certain threshold, with respect to the whole, its histogram, and so on).

Now, the mode of reporting of gapless RSSI-like measurement capability information from the user terminal UE to cell #1 (radio base station eNB1) will be described. As for gapless RSSI-like measurement capability information, the contents of a report can be configured depending on whether or not measurement gap periods G3 (see FIG. 3B) for dedicated use for unlicensed bands (for dedicated use in RSSI-like measurement) are configured.

When measurement gap periods G3 for dedicated use for RSSI-like measurements are not provided, the user terminal UE can report the linkage with frequency carriers where the user terminal UE can make gapless RSSI-like measurements, depending on the connecting frequency. Note that if there are a plurality of frequency carriers where the user terminal UE can make gapless RSSI-like measurements, the user terminal UE may report the combination of multiple frequency carriers.

By configuring such reporting contents, capability information, in which unlicensed bands that are associated with the connecting frequency carrier in advance are included, is reported from the user terminal UE. By this means, radio base station eNB1 can specify unlicensed bands where the user terminal UE can make gapless RSSI-like measurements. By this means, it is possible to configure measurement timing configuration information (RSSI MTC) for unlicensed bands by using only unlicensed bands that do not influence the receiving operation in the connecting frequency carrier.

On the other hand, when measurement gap periods G3 for dedicated use for RSSI-like measurements are provided, it is possible to report the number of frequency carriers where gapless RSSI-like measurements are possible. For example, assuming that the number of frequency carriers in which gapless RSSI-like measurements are possible is three, if the user terminal UE is connected with two unlicensed carriers, the user terminal UE can make gapless RSSI-like measurements in on more inter-frequency carrier.

By configuring such reporting contents, capability information, in which the number of unlicensed bands where gapless RSSI-measurements can be made is included, is reported from the user terminal UE. By this means, radio base station eNB1 can know the number of additional frequency carriers where the user terminal UE can make gapless RSSI-like measurements. By this means, it is possible to configure measurement timing configuration information (RSSI MTC) for unlicensed bands based on the upper limit number of unlicensed bands that do not influence the receiving operation in the connecting frequency carrier.

Note that, when measurement gap period s G3 for dedicated use for RSSI-like measurements are configured, even if no capability information regarding gapless RSSI-like measurement is reported from the user terminal UE to radio base station eNB1, radio base station eNB1 may interpret that measurement gap periods can be configured on unlicensed bands. That is, radio base station eNB may interpret that measurement gap periods cannot be configured on licensed bands, and that measurement gap periods can be configured on unlicensed bands alone.

Also, when measurement gap periods G3 for dedicated use for RSSI-like measurements are configured (see FIG. 3B), a user terminal without gapless RSSI-like measurement capability information may be controlled not to receive signals from the cells specified in measurement gap periods G3.

### (Radio Communication System)

Now, the structure of the radio communication system will be described below. In this radio communication system, the radio communication methods according to the embodiments described herein are employed. Note that the radio communication methods of the above-described examples may be applied individually or may be applied in combination.

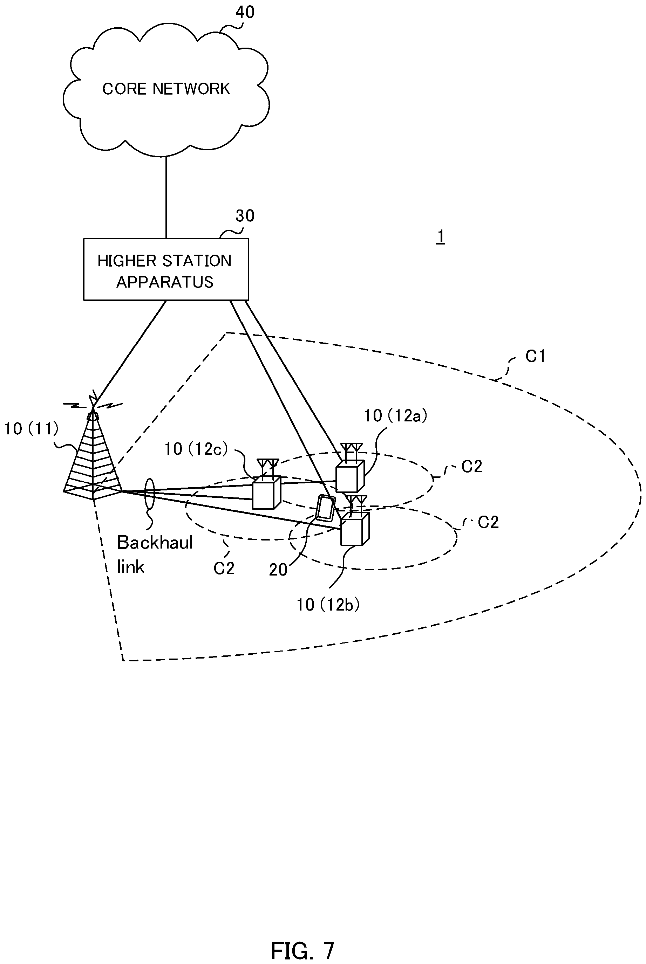

FIG. 7 is a diagram to show an example of a schematic structure of a radio communication system according to an embodiment of the present invention. The radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit. Note that the radio communication system 1 may be referred to as "SUPER 3G," "LTE-A" (LTE-Advanced), "IMT-Advanced," "4G," "5G," "FRA" (Future Radio Access) and so on.

The radio communication system 1 shown in FIG. 7 includes a radio base station 11 that forms a macro cell C1, and radio base stations 12 (12a to 12c) that form small cells C2, which are placed within the macro cell C1 and which are narrower than the macro cell C1. Also, user terminals 20 are placed in the macro cell C1 and in each small cell C2.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA by using at least two CCs (cells), or use six or more CCs.

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Between the radio base station 11 and the radio base stations 12 (or between two radio base stations 12), wire connection (optical fiber, the X2 interface, etc.) or wireless connection may be established.

For communication between the user terminal 20 and the radio base stations 11 and 12, not only licensed bands, but unlicensed bands can also be used.

The radio base station 11 and the radio base stations 12 are each connected with a higher station apparatus 30, and are connected with a core network 40 via the higher station apparatus 30. Note that the higher station apparatus 30 may be, for example, an access gateway apparatus, a radio network controller (RNC), a mobility management entity (MME) and so on, but is by no means limited to these. Also, each radio base station 12 may be connected with higher station apparatus 30 via the radio base station 11.

Note that the radio base station 11 is a radio base station having a relatively wide coverage, and may be referred to as a "macro base station," a "central node," an "eNB" (eNodeB), a "transmitting/receiving point" and so on. Also, the radio base stations 12 are radio base stations having local coverages, and may be referred to as "small base stations," "micro base stations," "pico base stations," "femto base stations," "HeNBs" (Home eNodeBs), "RRHs" (Remote Radio Heads), "transmitting/receiving points" and so on. Hereinafter the radio base stations 11 and 12 will be collectively referred to as "radio base stations 10," unless specified otherwise. The user terminals 20 are terminals to support various communication schemes such as LTE, LTE-A and so on, and may be either mobile communication terminals or stationary communication terminals.

In the radio communication system, as radio access schemes, OFDMA (Orthogonal Frequency Division Multiple Access) is applied to the downlink, and SC-FDMA (Single-Carrier Frequency Division Multiple Access) is applied to the uplink. OFDMA is a multi-carrier communication scheme to perform communication by dividing a frequency band into a plurality of narrow frequency bands (subcarriers) and mapping data to each subcarrier. SC-FDMA is a single-carrier communication scheme to mitigate interference between terminals by dividing the system band into bands formed with one or continuous resource blocks per terminal, and allowing a plurality of terminals to use mutually different bands. Note that the uplink and downlink radio access schemes are by no means limited to the combination of these.

In the radio communication system 1, a downlink shared channel (PDSCH: Physical Downlink Shared CHannel), which is used by each user terminal 20 on a shared basis, a broadcast channel (PBCH: Physical Broadcast CHannel), downlink L1/L2 control channels and so on are used as downlink channels. User data, higher layer control information and predetermined SIBs (System Information Blocks) are communicated in the PDSCH. Also, MIBs (Master Information Blocks) and so on are communicated by the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI) including PDSCH and PUSCH scheduling information is communicated by the PDCCH. The number of OFDM symbols to use for the PDCCH is communicated by the PCFICH. HARQ delivery acknowledgement signals (ACKs/NACKs) in response to the PUSCH are communicated by the PHICH. The EPDCCH may be frequency-division-multiplexed with the PDSCH (downlink shared data channel) and used to communicate DCI and so on, like the PDCCH.

Also, as downlink reference signals, cell-specific reference signals (CRSs), channel state measurement reference signals (CSI-RSs: Channel State Information-Reference Signals), user-specific reference signals (DM-RSs: Demodulation Reference Signals) for use for demodulation, and other signals are included.

In the radio communication system 1, an uplink shared channel (PUSCH: Physical Uplink Shared CHannel), which is used by each user terminal 20 on a shared basis, an uplink control channel (PUCCH: Physical Uplink Control CHannel), a random access channel (PRACH: Physical Random Access CHannel) and so on are used as uplink channels. User data and higher layer control information are communicated by the PUSCH. Also, downlink radio quality information (CQI: Channel Quality Indicator), delivery acknowledgment signals (HARQ-ACKs) and so on are communicated by the PUCCH. By means of the PRACH, random access preambles (RA preambles) for establishing connections with cells are communicated.

### <Radio base station>

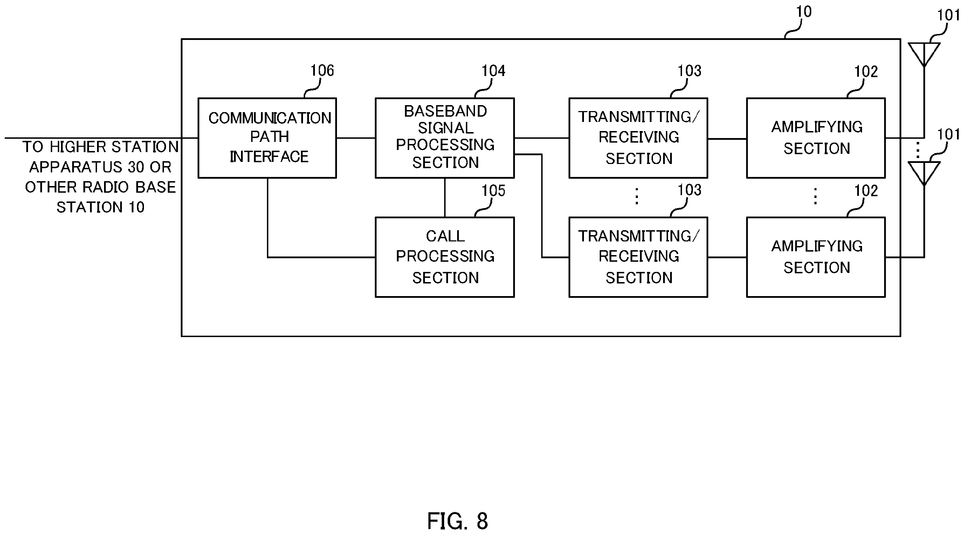

FIG. 8 is a diagram to show an example of an overall structure of a radio base station. A radio base station 10 has a plurality of transmitting/receiving antennas 10, amplifying sections 102, transmitting/receiving sections 103, a baseband signal processing section 104, a call processing section 105 and a communication path interface 106. Note that the transmitting/receiving sections 103 are comprised of transmitting sections and receiving sections.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Each transmitting/receiving section 103 converts baseband signals that are pre-coded and output from the baseband signal processing section 104 on a per antenna basis, into a radio frequency band. The radio frequency signals having been subjected to frequency conversion in the transmitting/receiving sections 103 are amplified in the amplifying sections 102, and transmitted from the transmitting/receiving antennas 101.

Meanwhile, as for uplink signals, radio frequency signals that are received in the transmitting/receiving antennas 101 are each amplified in the amplifying sections 102. Each transmitting/receiving section 103 receives uplink signals amplified in the amplifying sections 102. The received signals are converted into the baseband signal through frequency conversion in the transmitting/receiving sections 103 and output to the baseband signal processing section 104.

The transmitting/receiving sections (receiving sections) 203 can receive capability information (capability (UE capability)) from the user terminal 20. Then, the transmitting/receiving sections (transmitting sections) 103 can transmit RSSI MTC (Received Signal Strength Indicator Measurement Timing Configuration), to the user terminal 20, based on the capability. Also, the transmitting/receiving sections (transmitting sections) 103 can transmit, for example, DMTC (Discovery Measurement Timing Configuration), measurement gap configuration, restricted measurement subframe configuration and so on, to the user terminal 20. Also, when making transmission by using unlicensed bands, the transmitting/receiving sections (transmitting sections) 103 execute LBT (Listen Before Talk) and then make transmission. Note that, for the transmitting/receiving sections 103, transmitters/receivers, transmitting/receiving circuits or transmitting/receiving devices that can be described based on common understanding of the technical field to which the present invention pertains can be used.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base stations 10 and manages the radio resources.

The communication path interface section 106 transmits and receives signals to and from the higher station apparatus 30 via a predetermined interface. The communication path interface 106 transmits and receives signals to and from neighboring radio base stations 10 (backhaul signaling) via an inter-base station interface (for example, optical fiber, the X2 interface, etc.).

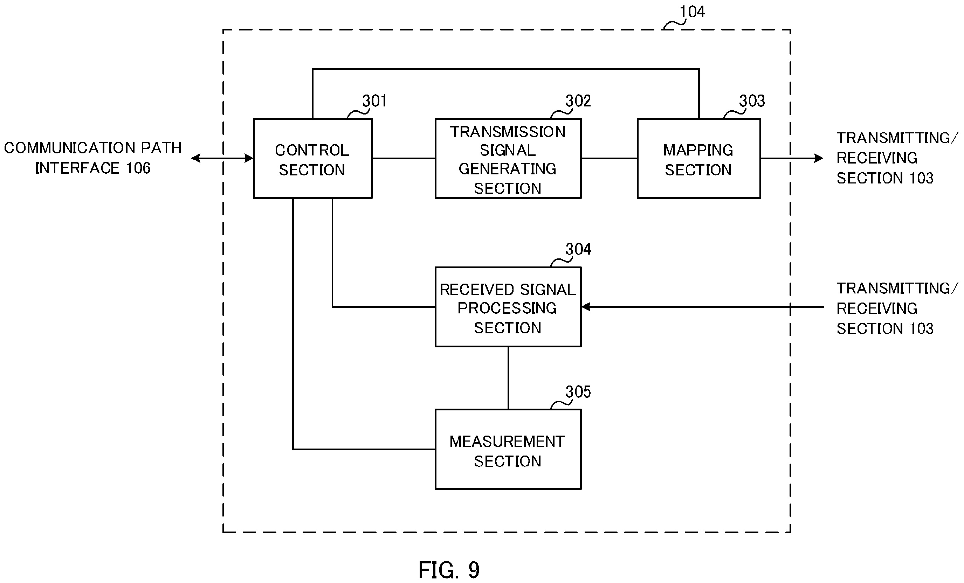

FIG. 9 is a diagram to show an example of a functional structure of a radio base station according to the present embodiment. Note that, although FIG. 9 primarily shows functional blocks that pertain to characteristic parts of the present embodiment, the radio base station 10 has other functional blocks that are necessary for radio communication as well. As shown in FIG. 9, the baseband signal processing section 104 has a control section (scheduler) 301, a transmission signal generating section (generating section) 302, a mapping section 303, a received signal processing section 304 and a measurement section 305.

The control section (scheduler) 301 controls the scheduling (for example, resource allocation, mapping and so on) of downlink data that is transmitted in the PDSCH and downlink control information that is communicated in the PDCCH and/or the EPDCCH. Furthermore, the control section (scheduler) 301 also controls the scheduling (for example, resource allocation, mapping and so on) of system information, synchronization signals, paging information, CRSs, CSI-RSs, discovery signals and so on.

Also, the control section 301 controls the scheduling of uplink data signals that are transmitted in the PUSCH from each user terminal, uplink control signals that are transmitted in the PUCCH and/or the PUSCH, random access preambles that are transmitted in the PRACH, and uplink reference signals.

Also, the control section 301 can control RSSI MTC, which is transmitted to the user terminal 20, depending on the capability received from the user terminal 20. Also, the control section 301 can control RSSI MTC to include at least one of information about measurement target frequencies, information about the timing, cycle and duration of measurement periods (measurement gap information), information about the user terminal UE's measurement format and information about the reporting method. Also, the control section 301 can configure RSSI MTC apart from existing DMTC (Discovery Measurement Timing Configuration), MGC (Measurement Gap Configuration) and RMSC (Restricted Measurement Subframe Configuration). Also, the control section 301 can configure RSSI MTC so that the RSSI measurement time of each frequency carrier (band) does not overlap one another.

Also, the control section 301 can control user terminals 20 that support LAA to use gaps for dedicated use in unlicensed bands (LAA (Licensed Assisted Access).

Note that, for the control section 301, a controller, a control circuit or a control device that can be described based on common understanding of the technical field to which the present invention pertains can be used.

The transmission signal generating section 302 generates DL signals based on commands from the control section 301 and outputs these signals to the mapping section 303. For example, the transmission signal generating section 302 generates DL assignments, which report downlink signal allocation information, and UL grants, which report uplink signal allocation information, based on commands from the control section 301. Note that, for the transmission signal generating section 302, a signal generator, a signal generating circuit or a signal generating device that can be described based on common understanding of the technical field to which the present invention pertains can be used.

The mapping section 303 maps the downlink signals generated in the transmission signal generating section 302 (for example, synchronization signals, cell-specific reference signals, discovery signals including channel state measurement reference signals, and so on) to predetermined radio resources, based on commands from the control section 301, and outputs these to the transmitting/receiving sections 103. Note that, for the mapping section 303, mapper, a mapping circuit or a mapping device that can be described based on common understanding of the technical field to which the present invention pertains can be used.

The receiving process section 304 performs receiving processes (for example, demapping, demodulation, decoding and so on) of UL signals (for example, delivery acknowledgement signals (HARQ-ACKs), data signals that are transmitted in the PUSCH, and so on) transmitted from the user terminals. The processing results are output to the control section 301. For the received signal processing section 304, a signal processor/measurer, a signal processing/measurement circuit or a signal processing/measurement device that can be described based on common understanding of the technical field to which the present invention pertains can be used.

Also, by using the received signals, the measurement section 305 can measure the received power (for example, the RSRP (Reference Signal Received Power)), the received quality (for example, the RSRQ (Reference Signal Received Quality)), channel states (CSI) and so on. Also, upon listening before DL signal transmission in unlicensed bands, the measurement section 305 can measure the received power of signals transmitted from other systems and/or the like.

The measurement section 305 can be constituted by a measurer, a measurement circuit or a measurement device that can be described based on common understanding of the technical field to which the present invention pertains.

### <User terminal>

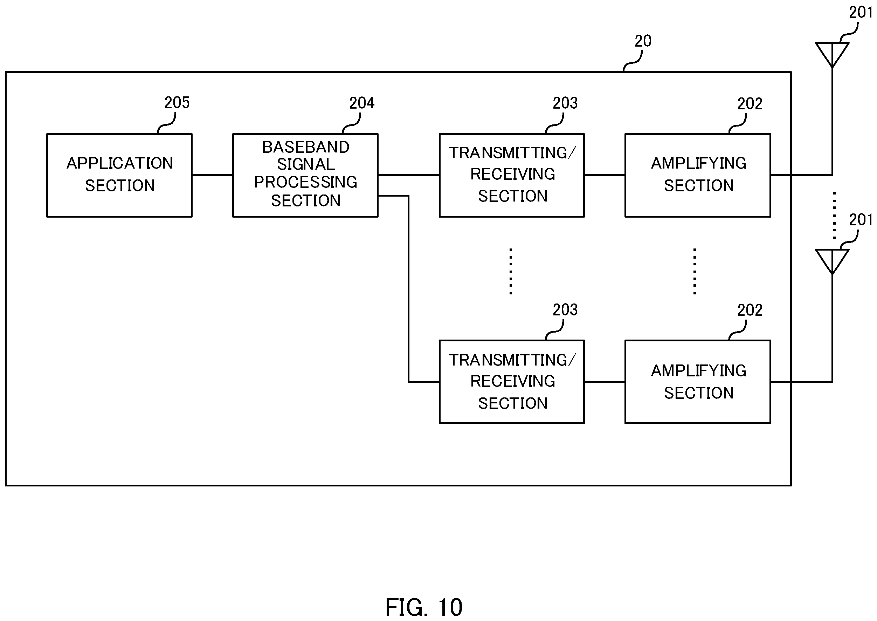

FIG. 10 is a diagram to show an example of an overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205. Note that the transmitting/receiving sections 203 may be comprised of transmitting sections and receiving sections.

Radio frequency signals that are received in a plurality of transmitting/receiving antennas 201 are each amplified in the amplifying sections 202. Each transmitting/receiving section 203 receives the downlink signals amplified in the amplifying sections 202. The received signals are subjected to frequency conversion and converted into the baseband signal in the transmitting/receiving sections 203, and output to the baseband signal processing section 204.

The transmitting/receiving sections (transmitting sections) 203 can transmit capability, which represents whether or not RSSI (-like) measurements can be made in unconnected carriers of different frequencies (unlicensed bands) without holding the receiving operation in the carrier (licensed band) where the user terminal 20 is currently connected, to the radio base station 10. Also, the transmitting/receiving sections (transmitting sections) 203 can configure and transmit a report, in which metrics that are acquired in long-term measurements (the proportion of time in which the RSSI value exceeds a certain threshold, its histogram and so on) are included. Also, the transmitting/receiving sections (receiving sections) 203 can receive RSSI-like, which is designated in RSSI MTC received from the radio base station 10.

Note that, for the transmitting/receiving sections 203, transmitters/receivers, transmitting/receiving circuits or transmitting/receiving devices that can be described based on common understanding of the technical field to which the present invention pertains can be used.

In the baseband signal processing section 204, the baseband signal that is input is subjected to an FFT process, error correction decoding, a retransmission control receiving process, and so on. Downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, pre-coding, a discrete Fourier transform (DFT) process, an IFFT process and so on, and the result is forwarded to each transmitting/receiving section 203. The baseband signal that is output from the baseband signal processing section 204 is converted into a radio frequency band in the transmitting/receiving sections 203. The radio frequency signals that are subjected to frequency conversion in the transmitting/receiving sections 203 are amplified in the amplifying sections 202, and transmitted from the transmitting/receiving antennas 201.

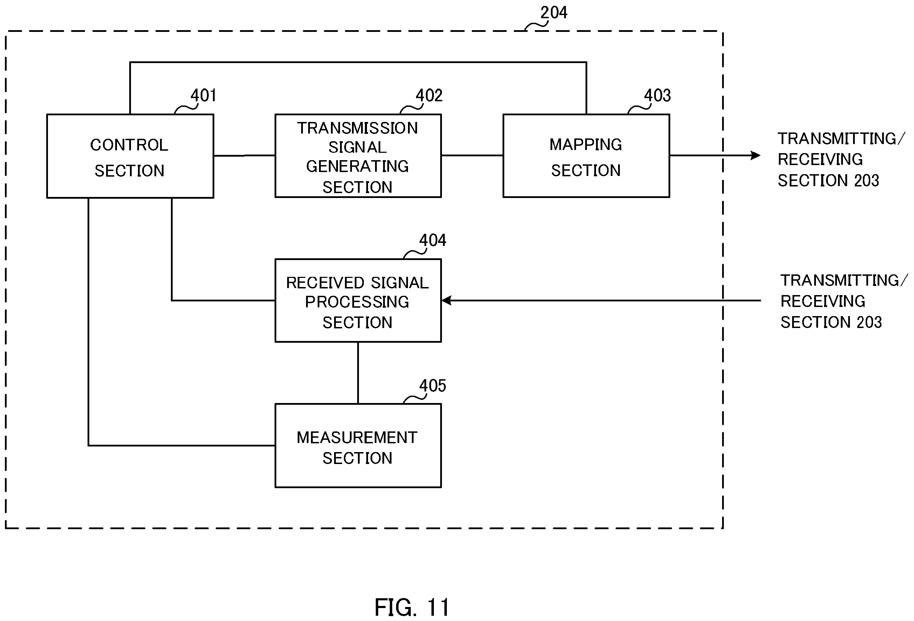

FIG. 11 is a diagram to show an example of a functional structure of a user terminal according to the present embodiment. Note that, although FIG. 11 primarily shows functional blocks that pertain to characteristic parts of the present embodiment, the user terminal 20 has other functional blocks that are necessary for radio communication as well. As shown in FIG. 11, the baseband signal processing section 204 provided in the user terminal 20 has a control section 401, a transmission signal generating section 402, a mapping section 403, a received signal processing section 404 and a measurement section 405.

The control section 401 can control the transmission signal generating section 402, the mapping section 403 and the received signal processing section 404. For example, the control section 401 acquires the downlink control signals (signals transmitted in the PDCCH/EPDCCH) and downlink data signals (signals transmitted in the PDSCH) transmitted from the radio base station 10, from the received signal processing section 404. The control section 401 controls the generation/transmission (UL transmission) of uplink control signals (for example, HARQ-ACKs and so on) and uplink data based on downlink control information (UL grants), the result of deciding whether or not retransmission control is necessary for downlink data, and so on. Also, the control section 401 controls the transmission of UL signals based on the result of listening (UL-LBT).

Also, the control section 401 commands the measurement section 405 to make RSSI-like measurements, depending on the contents indicated in RSSI MTC received in the transmitting/receiving sections (receiving sections) 203. Also, depending on the relationships between the contents indicated in RSSI MTC and the locations of existing DMTC, MGC and RMSC gaps, the control section 401 can control whether or not to measure RSSI, the timing to measure RSSI, and so on.

Also, the control section 401 is by no means limited to RSSI measurements, and can control the measurement section 405 to measure the state of interference in user terminals by using measurements that are different from RSSI-like measurements and RSSI measurements. Note that, for the control section 401, a controller, a control circuit or a control device that can be described based on common understanding of the technical field to which the present invention pertains can be used.

The transmission signal generating section 402 generates UL signals based on commands from the control section 401, and outputs these signals to the mapping section 403. For example, the transmission signal generating section 402 generates uplink control signals such as delivery acknowledgement signals (HARQ-ACKs) in response to DL signals, channel state information (CSI) and so on, based on commands from the control section 401.

Also, the transmission signal generating section 402 generates uplink data signals based on commands from the control section 401. For example, when a UL grant is included in a downlink control signal that is reported from the radio base station 10, the control section 401 commands the transmission signal generating section 402 to generate an uplink data signal. For the transmission signal generating section 402, a signal generator, a signal generating circuit or a signal generating device that can be described based on common understanding of the technical field to which the present invention pertains can be used.

The mapping section 403 maps the uplink signals (uplink control signals and/or uplink data) generated in the transmission signal generating section 402 to radio resources based on commands from the control section 401, and output the result to the transmitting/receiving sections 203. For the mapping section 403, mapper, a mapping circuit or a mapping device that can be described based on common understanding of the technical field to which the present invention pertains can be used.

The received signal processing section 404 performs the receiving processes (for example, demapping, demodulation, decoding and so on) of the DL signals (for example, downlink control signals that are transmitted from the radio base station in the PDCCH/EPDCCH, downlink data signals transmitted in the PDSCH, and so on). The received signal processing section 404 outputs the information received from the radio base station 10, to the control section 401 and the measurement section 405. Note that, for the received signal processing section 404, a signal processor/measurer, a signal processing/measurement circuit or a signal processing/measurement device that can be described based on common understanding of the technical field to which the present invention pertains can be used. Also, the received signal processing section 404 can constitute the receiving section according to the present invention.

Also, by using the received signals, the measurement section 405 can measure the received signal strength (RSSI (Received Signal Strength Indicator)), the received power (for example, RSRP (Reference Signal Received Power)), the receiving quality (RSRQ (Reference Signal Received Quality)), channel states and so on. Furthermore, upon listening that is executed before UL signals are transmitted in unlicensed bands, the measurement section 405 can measure the received power of signals transmitted from other systems and so on. The results of measurements in the measurement section 405 are output to the control section 401. The control section 401 can control the transmission of UL signals based on measurement results (listening results) in the measurement section 405.

The measurement section 405 can be constituted by a measurer, a measurement circuit or a measurement device that can be described based on common understanding of the technical field to which the present invention pertains.

Note that the block diagrams that have been used to describe the above embodiments show blocks in functional units. These functional blocks (components) may be implemented in arbitrary combinations of hardware and software. Also, the means for implementing each functional block is not particularly limited. That is, each functional block may be implemented with one physically-integrated device, or may be implemented by connecting two physically-separate devices via radio or wire and using these multiple devices.

For example, part or all of the functions of the radio base station 10 and the user terminal 20 may be implemented by using hardware such as an ASIC (Application-Specific Integrated Circuit), a PLD (Programmable Logic Device), an FPGA (Field Programmable Gate Array) and so on. Also, the radio base stations 10 and user terminals 20 may be implemented with a computer device that includes a processor (CPU), a communication interface for connecting with networks, a memory and a computer-readable storage medium that holds programs. That is, the radio base stations and user terminals according to an embodiment of the present invention may function as computers that execute the processes of the radio communication method of the present invention.

Here, the processor and the memory are connected with a bus for communicating information. Also, the computer-readable recording medium is a storage medium such as, for example, a flexible disk, an opto-magnetic disk, a ROM (Read Only Memory), an EPROM (Erasable Programmable ROM), a CD-ROM (Compact Disc-ROM), a RAM (Random Access Memory), a hard disk and so on. Also, the programs may be transmitted from the network through, for example, electric communication channels. Also, the radio base stations 10 and user terminals 20 may include input devices such as input keys and output devices such as displays.

The functional structures of the radio base stations 10 and user terminals 20 may be implemented with the above-described hardware, may be implemented with software modules that are executed on the processor, or may be implemented with combinations of both. The processor controls the whole of the user terminals by running an operating system. Also, the processor reads programs, software modules and data from the storage medium into the memory, and executes various types of processes.

Here, these programs have only to be programs that make a computer execute each operation that has been described with the above embodiments. For example, the control section 401 of the user terminals 20 may be stored in the memory and implemented by a control program that operates on the processor, and other functional blocks may be implemented likewise.

Also, software and commands may be transmitted and received via communication media. For example, when software is transmitted from a website, a server or other remote sources by using wired technologies such as coaxial cables, optical fiber cables, twisted-pair cables and digital subscriber lines (DSL) and/or wireless technologies such as infrared radiation, radio and microwaves, these wired technologies and/or wireless technologies are also included in the definition of communication media.

Note that the terminology used in this description and the terminology that is needed to understand this description may be replaced by other terms that convey the same or similar meanings. For example, "channels" and/or "symbols" may be replaced by "signals" (or "signaling"). Also, "signals" may be "messages." Furthermore, "component carriers" (CCs) may be referred to as "carrier frequencies," "cells" and so on.

Also, the information and parameters described in this description may be represented in absolute values or in relative values with respect to a predetermined value, or may be represented in other information formats. For example, radio resources may be specified by indices.

The information, signals and/or others described in this description may be represented by using a variety of different technologies. For example, data, instructions, commands, information, signals, bits, symbols and chips, all of which may be referenced throughout the description, may be represented by voltages, currents, electromagnetic waves, magnetic fields or particles, optical fields or photons, or any combination of these.

The example s/embodiments illustrated in this description may be used individually or in combinations, and the mode of may be switched depending on the implementation. Also, a report of predetermined information (for example, a report to the effect that "X holds") does not necessarily have to be sent explicitly, and can be sent implicitly (by, for example, not reporting this piece of information).

Reporting of information is by no means limited to the example s/embodiments described in this description, and other methods may be used as well. For example, reporting of information may be implemented by using physical layer signaling (for example, DCI (Downlink Control Information) and UCI (Uplink Control Information)), higher layer signaling (for example, RRC (Radio Resource Control) signaling, MAC (Medium Access Control) signaling, and broadcast information (MIBs (Master Information Blocks) and SIBs (System Information Blocks))), other signals or combinations of these. Also, RRC signaling may be referred to as "RRC messages," and can be, for example, an RRC connection setup message, RRC connection reconfiguration message, and so on.

The examples/embodiments illustrated in this description may be applied to LTE (Long Term Evolution), LTE-A (LTE-Advanced), SUPER 3G, IMT-Advanced, 4G, 5G, FRA (Future Radio Access), CDMA 2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), and other adequate systems, and/or next-generation systems that are enhanced based on these.

The order of processes, sequences, flowcharts and so on that have been used to describe the examples/embodiments herein may be re-ordered as long as inconsistencies do not arise. For example, although various methods have been illustrated in this description with various components of steps in exemplary orders, the specific orders that illustrated herein are by no means limiting.

Now, although the present invention has been described in detail above, it should be obvious to a person skilled in the art that the present invention can be implemented with various corrections and in various modifications, without departing from the scope defined by the appended claims.

## Claims

1. A user terminal (20) for a radio communication system (1) employing Listen Before Talk, LBT, in carrier aggregation performed using a licensed band and an unlicensed band, the user terminal comprising:
a receiving section (203) configured to receive Received Signal Strength Indicator, RSSI, measurement timing configuration, MTC, information for the unlicensed band, wherein the MTC information includes information indicating a duration of the RSSI measurement, information indicating a frequency of the RSSI measurement, information indicating a cycle of the RSSI measurement and information indicating a timing of the RSSI measurement with reference to a subframe timing of a connecting cell,
a measurement section (405) configured to make an RSSI measurement for a specific frequency carrier, based on the MTC information and Measurement Gap Configuration, MGC; and
a transmission section (203) configured to transmit a measurement result.

2. The user terminal (20) according to claim 1, wherein the transmission section (203) is configured to report a proportion of time in which an RSSI value is equal to or greater than a threshold.

3. A radio base station (10) for a radio communication system (1) employing Listen Before Talk, LBT, in carrier aggregation performed using a licensed band and an unlicensed band, the radio base station comprising:
a generating section (302) configured to generate Received Signal Strength Indicator, RSSI, measurement timing configuration, MTC, information for the unlicensed band, wherein the MTC information includes information indicating a duration of the RSSI measurement, information indicating a frequency of the RSSI measurement, information indicating a cycle of the RSSI measurement and information indicating a timing of the RSSI measurement with reference to a subframe timingof a connecting cell;
a transmission section (103) configured to transmit the MTC information; and
a receiving section (103) configured to receive a result of RSSI measurement based on the MTC information and Measurement Gap Configuration, MGC.

4. A radio communication method for a user terminal (20) in a radio communication system (1) employing Listen Before Talk, LBT, in carrier aggregation performed using a licensed band and an unlicensed band, the radio communication method comprising the steps of:
receiving (S102) Received Signal Strength Indicator, RSSI, measurement timing configuration, MTC, information for the unlicensed band, wherein the MTC information includes information indicating a duration of the RSSI measurement, information indicating a frequency of the RSSI measurement, information indicating a cycle of the RSSI measurement and information indicating a timing of the RSSI measurement with reference to a subframe timing of a connecting cell,
making (S103) an RSSI measurement for a specific frequency carrier, based on the MTC information and Measurement Gap Configuration, MGC; and
transmitting (S106) a measurement result.

## Patentansprüche

1. Benutzerendgerät (20) für ein Funkkommunikationssystem (1), das Listen-Before-Talk, LBT, bei einer Trägeraggregation einsetzt, die unter Verwendung eines lizenzierten Bandes und eines nicht lizenzierten Bandes durchgeführt wird, wobei das Benutzerendgerät umfasst:
einen Empfangsabschnitt (203), der so konfiguriert ist, dass er Empfangssignalstärkeanzeiger-, RSSI, Messtimingkonfigurations-, MTC, Informationen für das nicht lizenzierte Band empfängt, wobei die MTC-Informationen Informationen einschließen, die eine Dauer der RSSI-Messung angeben, Informationen, die eine Frequenz der RSSI-Messung angeben, Informationen, die einen Zyklus der RSSI-Messung angeben, und Informationen, die ein Timing der RSSI-Messung unter Bezug auf ein Teilrahmen-Timing einer Verbindungszelle angeben,
einen Messabschnitt (405), der so konfiguriert ist, dass er eine RSSI-Messung für einen spezifischen Frequenzträger auf der Grundlage der MTC-Informationen und der Messlückenkonfiguration, MGC, durchführt; und
einen Übertragungsabschnitt (203), der so konfiguriert ist, dass er ein Messergebnis überträgt.

2. Benutzerendgerät (20) nach Anspruch 1, wobei der Übertragungsabschnitt (203) so konfiguriert ist, dass er einen Anteil der Zeit meldet, in der ein RSSi-Wert gleich oder größer als ein Schwellenwert ist.

3. Funkbasisstation (10) für ein Funkkommunikationssystem (1), das Listen-Before-Talk, LBT, bei einer Trägeraggregation einsetzt, die unter Verwendung eines lizenzierten Bandes und eines nicht lizenzierten Bandes durchgeführt wird, wobei die Funkbasisstation umfasst:
einen Erzeugungsabschnitt (302), der so konfiguriert ist, dass er Empfangssignalstärkeanzeiger-, RSSI, Messtimingkonfigurations-, MTC, Informationen für das nicht lizenzierte Band erzeugt,
wobei die MTC-Informationen Informationen einschließen, die eine Dauer der RSSI-Messung angeben, Informationen, die eine Frequenz der RSSI-Messung angeben, Informationen, die einen Zyklus der RSSI-Messung angeben, und Informationen, die ein Timing der RSSI-Messung unter Bezug auf ein Teilrahmen-Timing einer Verbindungszelle angeben;
einen Übertragungsabschnitt (103), der so konfiguriert ist, dass er MTC-Informationen überträgt; und
einen Empfangsabschnitt (103), der so konfiguriert ist, dass er ein Ergebnis der RSSI-Messung auf der Grundlage der MTC-Informationen und der Messlückenkonfiguration, MGC, empfängt.

4. Funkkommunikationsverfahren für ein Benutzerendgerät (20) in einem Funkkommunikationssystem (1), das Listen-Before-Talk, LBT, bei einer Trägeraggregation einsetzt, die unter Verwendung eines lizenzierten Bandes und eines nicht lizenzierten Bandes durchgeführt wird, wobei das Funkkommunikationsverfahren die Schritte umfasst von:
Empfangen (S102) von Empfangssignalstärkeanzeiger-, RSSI, Messtimingkonfigurations-, MTC, Informationen für das nicht lizenzierte Band, wobei die MTC-Informationen Informationen einschließen, die eine Dauer der RSSI-Messung angeben, Informationen, die eine Frequenz der RSSI-Messung angeben, Informationen, die einen Zyklus der RSSI-Messung angeben, und Informationen, die ein Timing der RSSI-Messung unter Bezug auf ein Teilrahmen-Timing einer Verbindungszelle angeben,
Durchführen (S103) einer RSSI-Messung für einen spezifischen Frequenzträger auf der Grundlage der MTC-Informationen und der Messlückenkonfiguration, MGC; und
Übertragen (S106) eines Messergebnisses.

## Revendications

1. Terminal (20) d'utilisateur pour un système (1) de communication radio utilisant le Listen Before Talk (Écouter avant de parler), LBT, en agrégation de porteuses réalisée à l'aide d'une bande sous licence et d'une bande sans licence, le terminal d'utilisateur comprenant :
une section de réception (203) configurée pour recevoir des informations de configuration de synchronisation de mesure, MTC, d'indicateur d'intensité de signal reçu, RSSI pour la bande sans licence, dans lequel les informations MTC incluent des informations indiquant une durée de la mesure RSSI, des informations indiquant une fréquence de la mesure RSSI, des informations indiquant un cycle de la mesure RSSI et des informations indiquant une synchronisation de la mesure RSSI par rapport à une synchronisation de sous-trame d'une cellule de connexion,
une section de mesure (405) configurée pour réaliser une mesure RSSI pour une porteuse de fréquence spécifique, sur la base des informations MTC et d'une configuration d'intervalle de mesure, MGC ; et
une section d'émission (203) configurée pour émettre un résultat de mesure.

2. Terminal (20) d'utilisateur selon la revendication 1, dans lequel la section d'émission (203) est configurée pour signaler une proportion de temps dans laquelle une valeur RSSI est égale ou supérieure à un seuil.

3. Station (10) de base radio pour un système (1) de communication radio utilisant le Listen Before Talk (Écouter avant de parler), LBT, en agrégation de porteuses réalisée à l'aide d'une bande sous licence et d'une bande sans licence, la station de base radio comprenant :
une section de génération (302) configurée pour générer des informations de configuration de synchronisation de mesure, MTC, d'indicateur d'intensité de signal reçu, RSSI pour la bande sans licence, dans laquelle les informations MTC incluent des informations indiquant une durée de la mesure RSSI, des informations indiquant une fréquence de la mesure RSSI, des informations indiquant un cycle de la mesure RSSI et des informations indiquant une synchronisation de la mesure RSSI par rapport à une synchronisation de sous-trame d'une cellule de connexion ;
une section d'émission (103) configurée pour émettre les informations MTC ; et
une section de réception (103) configurée pour recevoir une mesure RSSI sur la base des informations MTC et d'une configuration d'intervalle de mesure, MGC.

4. Procédé de communication radio pour un terminal (20) d'utilisateur dans un système (1) de communication radio utilisant le Listen Before Talk (Écouter avant de parler), LBT, en agrégation de porteuses réalisée à l'aide d'une bande sous licence et d'une bande sans licence, le procédé de communication radio comprenant les étapes consistant à :
recevoir (S102) des informations de configuration de synchronisation de mesure, MTC, d'indicateur d'intensité de signal reçu, RSSI, pour la bande sans licence, dans lequel les informations MTC incluent des informations indiquant une durée de la mesure RSSI, des informations indiquant une fréquence de la mesure RSSI, des informations indiquant un cycle de la mesure RSSI et des informations indiquant une synchronisation de la mesure RSSI par rapport à une synchronisation de sous-trame d'une cellule de connexion,
réaliser (S103) une mesure RSSI pour une porteuse de fréquence spécifique, sur la base des informations MTC et d'une configuration d'intervalle de mesure, MGC ; et
émettre (S106) un résultat de mesure.
